Europäisches Patentamt

European Patent Office

Office européen des brevets

(19)

(11) Veröffentlichungsnummer: **0 167 904**
A2

(12)
# EUROPÄISCHE PATENTANMELDUNG

(21) Anmeldenummer: 85107712.3

(22) Anmeldetag: 21.06.85

(51) Int. Cl.⁴: **B 29 C 45/20**

(30) Priorität: 12.07.84 DE 3425660

(43) Veröffentlichungstag der Anmeldung:
15.01.86 Patentblatt 86/3

(84) Benannte Vertragsstaaten:
GB NL SE

(71) Anmelder: INCOE Exp. Inc. Deutschland
Frankfurter Strasse 59
D-6072 Dreieich(DE)

(72) Erfinder: Gauler, Kurt
Kurt-Tucholsky-Strasse 28
D-6073 Egelsbach(DE)

(74) Vertreter: Eyer, Eckhardt Philipp, Dipl.-Ing. et al,
Patentanwälte Eyer & Linser Robert-Bosch-Strasse 12a
D-6072 Dreieich(DE)

(54) Düse für Kunststoffspritzmaschinen.

(57) Düse für Kunststoffspritzmaschinen aus einem den Fließkanal für den Kunststoff enthaltenden, mit einer Spitze versehenen Schaft, wobei der Fließkanal vor Erreichen der Spitze in zwei Teilkanäle geteilt ist, bei der der Schaft ist von einem Rohrabschnitt gebildet ist, in dessen vorderer Stirnöffnung ein in einer Spitze auslaufendes, mit seiner Spitze über den Schaft hinausstehendes Plättchen gehalten ist. Der Rohrabschnitt ist an seiner Stirnöffnung einerseits mit einer inneren Ausdrehung and andererseits mit einer äußeren Abdrehung versehen, von denen die innere Ausdrehung als Sitz für das Plättchen und die äußere Abdrehung als Sitz für eine Düsenkappe dient, in der einerseits das Anspritzloch der Düse ausgebildet ist und die andererseits der Halterung des Plättchens in der Ausdrehung dient. Zu diesem Zweck ist an dem Plättchen am Übergang in den spitz zulaufenden Bereich eine Schulter vorgesehen ist, die als Anlagefläche für eine entsprechende in der Düsenkappe ausgebildete Schulter dient. Es kann jedoch auch jede andere Art der Plättchenhalterung vorgesehen sein.

Fig. 1

EP 0 167 904 A2

Die Erfindung betrifft eine Düse für Kunststoffspritzmaschinen, bestehend aus einem den Fließkanal für den Kunststoff enthaltenden, mit einer Spitze versehenen Schaft, wobei der Fließkanal vor Erreichen der Spitze in mindestens zwei Teilkanäle geteilt ist.

Bei einer bekannten Düse dieser Art ist der Schaft aus einem als Ganzes angespitzten Stabprofil gebildet, das mit einer den Fließkanal für den Kunststoff bildenden Axialbohrung versehen ist, die sich vor Erreichen der Spitze in zwei nach der Seite abgeknickte Bohrungen verzweigt.

Die bekannte Düse weist einige schwerwiegende Nachteile auf. Ihr wesentlicher Nachteil besteht darin, daß durch die Teilung des Fließkanals in zwei sich verzweigende und insbesondere abknickende Teilkanäle eine zweimalige Änderung der Fließrichtung des Kunststoffes beim Spritzvorgang bewirkt wird, die zu bleibenden Veränderungen der Materialstruktur führen, die aufgrund des bekannten Erinnerungsvermögens auch nach der Zusammenführung der Kunststoffmasse nicht oder nur teilweise wieder reversiert werden können. Die Folge dieser bleibenden Strukturänderungen sind dauerhafte Qualitätseinbußen des fertigen Spritzteils insbesondere in bezug auf dessen Festigkeit. Darüberhinaus weist die bekannte Düse einen wesentlichen Nachteil in gebrauchstechnischer Hinsicht auf. Die Spitze

stellt ein hochbeanspruchtes Teil der Düse dar und unterliegt insbesondere in den Fällen, in denen verstärkte, d.h. Glasfasermaterial enthaltende Kunststoffe verspritzt werden, einem hohen Verschleiß, der ein häufiges Auswechseln notwendig macht. Bei den bekannten Düsen erfordert ein solcher Austausch den Wechsel des gesamten Düsenschaftes, was nicht nur einen erheblichen Materialaufwand sondern darüberhinaus auch einen erheblichen Arbeitsaufwand notwendig macht, da der Austausch des Schaftes auch die Demontage des den Schaft umgebenden Heizmantels bedingt.

Der vorliegenden Erfindung liegt als Aufgabe die Schaffung einer Düse für Kunststoffspritzmaschinen zugrunde, durch die die beim Spritzen mit den bekannten Düse auftretende Fließstörungen bezw. die sich daraus ergebenden Materialveränderungen weitgehend vermieden werden und die einen einfachen Austausch des hochbeanspruchten, die Spitze enthaltenden Teiles ermöglicht. Die Erfindung besteht darin, daß der Schaft von einem Rohrabschnitt gebildet ist, in dessen vorderer Stirnöffnung ein in einer Spitze auslaufendes, mit seiner Spitze über den Rohrschaft hinausstehendes Plättchen gehalten ist.

Durch die Erfindung ist eine Düse für Kunststoffspritzmaschinen geschaffen, mit deren Hilfe der durch die Zuspitzung des Düsenkörpers zu einer Aufsetzspitze angestrebte Zweck, nämlich die Verkürzung des Abriß-nippels am Kunststoffspritzteil, voll erfüllt wird und in der eine nur geringfügige Auslenkung des Kunststoffstromes und nicht eine zweimalige Ablenkung unter vollständiger Änderung der Fließrichtung eintritt. Es tritt infolgedessen keine oder allenfalls geringfügige Beeinflussung des

Kunststoffgefüges ohne maßgebliche Beeinträchtigung des Erinnerungsvermögens des Kunststoffes ein, so daß beim erneuten Zusammenführen des
Kunststoffes im Düsenmundstück eine weitgehende Rückvernetzung des Kunststoffes eintritt. Demgemäß ist auch eine Schädigung der Kunststoffeigenschaften weitestgehend verhindert. Darüberhinaus ermöglicht die Düse auf
einfachste Weise eine Erneuerung einer evtl. schadhaft oder durch Verschleiß unbrauchbar gewordenen Spitze, ohne daß es hierzu der Demontage
des Schaftes bedarf. Es genügt lediglich die Entnahme des Plättchens
selbst aus der Stirnöffnung des Rohrabschnittes und dessen Ersatz durch
ein neues, unbeschädigtes Plättchen.

In einer vorteilhaften Ausführungsform der Düse nach de Erfindung ist
der den Düsenkörper bildende Rohrabschnitt an seiner Stirnöffnung mit
einer inneren Ausdrehung und einer äußeren Abdrehung versehen, von denen
die innere Ausdrehung als Sitz für das Plättchen und die äußere Abdrehung
als Sitz für eine Düsenkappe dient, in der einerseits das Anspritzloch
der Düse ausgebildet ist und die andererseits der Halterung des Plättchens in der Ausdrehung dient. Hierbei ist zweckmäßig an dem Plättchen am
Übergang in den spitz zulaufenden Bereich eine Schulter vorgesehen, die
als Anlagefläche für eine entsprechende in der Düsenkappe ausgebildete
Schulter dient. Es ist auf diese Weise eine einfach herstellbare und eine
sichere Halterung des Plättchens gewährleistende Befestigung geschaffen,
durch die die angestrebte leichte Austauschbarkeit nicht beeinträchtigt
ist.

Die Erfindung ist in der Zeichnung beispielsweise veranschaulicht. Es zeigen

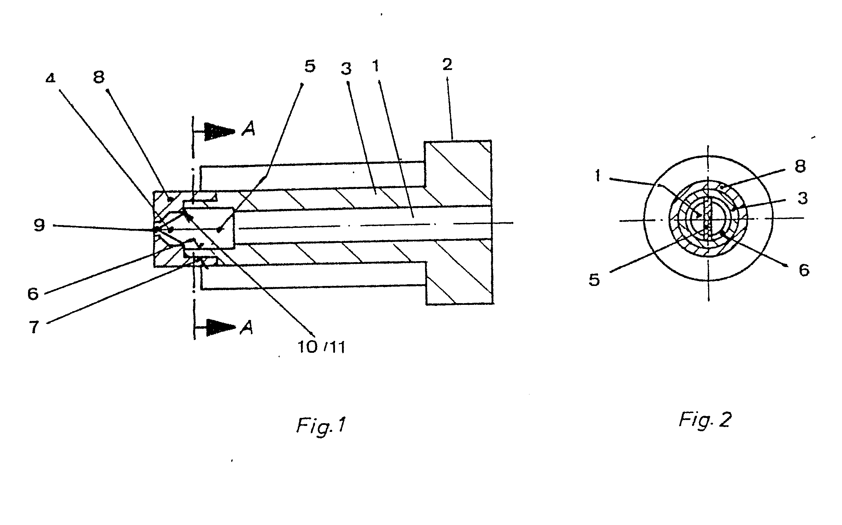

Fig. 1    einen Längsschnitt durch einen Düsenschaft

Fig. 2    einen Schnitt nach A-A durch Fig. 1

Die in der Zeichnung dargestellte Düse für Kunststoffspritzmaschinen besteht im wesentlichen aus einem den Fließkanal 1 für den Kunststoff enthaltenden, mit einer Spitze versehenen, als Ganzes mit 2 bezeichneten Schaft, wobei der Fließkanal 1 vor Erreichen der Spitze in zwei Teilkanäle geteilt ist. Der Schaft 2 ist von einem Rohrabschnitt 3 gebildet ist, in dessen vorderer Stirnöffnung ein in einer Spitze 4 auslaufendes, mit seiner Spitze 4 über den Schaft 2 hinausstehendes Plättchen 5 gehalten ist. Der Rohrabschnitt 3 ist an seiner Stirnöffnung einerseits mit einer inneren Ausdrehung 6 und andererseits mit einer äußeren Abdrehung 7 versehen, von denen die innere Ausdrehung 6 als Sitz für das Plättchen 5 und die äußere Abdrehung 7 als Sitz für eine Düsenkappe 8 dient, in der einerseits das Anspritzloch 9 der Düse ausgebildet ist und die andererseits der Halterung des Plättchens 5 in der Ausdrehung 6 dient. Zu diesem Zweck ist an dem Plättchen 5 am Übergang in den spitz zulaufenden Bereich 4 eine Schulter 10 vorgesehen ist, die als Anlagefläche für eine entsprechende in der Düsenkappe ausgebildete Schulter 11 dient. Es kann jedoch auch jede andere Art der Plättchenhalterung vorgesehen sein.

Patentansprüche

1. Düse für Kunststoffspritzmaschinen, bestehend aus einem den Fließkanal für den Kunststoff enthaltenden, mit einer Spitze versehenen Schaft, wobei der Fließkanal vor Erreichen der Spitze in mindestens zwei Teilkanäle geteilt ist, dadurch gekennzeichnet, daß der Schaft (2) von einem Rohrabschnitt (3) gebildet ist, in dessen vorderer Stirnöffnung ein in einer Spitze (4) auslaufendes, mit seiner Spitze (4) über den Schaft (2) hinausstehendes Plättchen (5) gehalten ist.

2. Düse für Kunststoffspritzmaschinen nach Anspruch 1, dadurch gekennzeichnet, daß der Rohrabschnitt (3) an seiner Stirnöffnung mit einer inneren Ausdrehung (6) und einer äußeren Abdrehung (7) versehen ist, von denen die innere Ausdrehung (6) als Sitz für das Plättchen (5) und die äußere Abdrehung (7) als Sitz für eine Düsenkappe (8) dient, in der einerseits das Anspritzloch (9) der Düse ausgebildet ist und die andererseits der Halterung des Plättchens (5) in der Ausdrehung (6) dient.

3. Düse für Kunststoffspritzmaschinen nach Anspruch 2, dadurch gekennzeichnet, daß an dem Plättchen (5) am Übergang in den spitz zulaufenden Bereich (4) eine Schulter (10) vorgesehen ist, die als Anlagefläche für eine entsprechende in der Düsenkappe ausgebildete Schulter (11) dient.

Fig.1

Fig.2

0167904